# EUROPEAN PATENT APPLICATION

(11) **EP 0 602 498 A1**
(43) Date of publication of application: **22.06.1994**
(21) Application number: 93119647.1
(22) Date of filing: 06.12.1993
(51) Int. Cl.: F16L 37/084

(54) **Reusable fast coupling and self-locking coupler**

(30) Priority: 18.12.1992 IT MI922904
(71) Applicant: RTGAMMA S.p.A, I-20021 Baranzate di Bollate (MI) (IT)
(72) Inventor: De Vita, Giandomenico, I-21047 Saronno, Varese (IT)
(74) Representative: Petruzzelli, Antonio European Patent Attorney

(57) **Abstract**

A coupler (10) comprising a main annular body (11) which can be engaged with a first element to be connected, and a plurality of flexible fins (14) which extend from said annular body (11) towards and against a second element to be connected. Each of the flexible fins (14) has an end portion (16), which is rotated in relation to its own longitudinal axis, and a second end portion (16) which is slanted in respect to the transversal plane defined by the annular body (11) to provide a coupler having the advantageous features of being reusable fast coupling and self-locking.

## Description

The present invention relates to a coupler, having an annular body from which protrude a plurality of radial fins for the fast coupling of a first and a second element to be connected.

A coupler having an annular body fitted with radial inwardly fins for retaining a pin or tube which is inserted in the central hole of the body, and in which the fins have a rectilinear longitudinal profile and are bent by the insertion of the tube, are already known in the art.

This kind of coupler, although it is a fast coupling connection element, has the disadvantage of not being reusable after the connection has been disconnected.

In fact when the connected tube is withdrawn from the coupler, the fins which have been bent by the previous insertion of the tube are counter-bent and permanently deformed, thus preventing the connection coupler from being used further.

A number of examples of joining of components which use a connection composed of a threaded screw and nut are also known in the art.

In these connections, so that the nut and bolt exert the necessary connection action permanently, said elements have to be screwed tightly against the components to be connected and/or use anti-unscrewing systems such as for example washers, spring washers, split pins and others.

Said system of connection is disadvantageous due to the fact that it has to use an excessive amount of components as for example the aforementioned anti-unscrewing elements and in that a laborious and irksome tightening action is required which, as mentioned previously, is performed by exerting a certain degree of torque on the nut or on the bolt, generally by means of suitable devices such as a spanner or a screwdriver.

The object of the present invention is that of providing a fast coupling, reusable coupler.

A further object of the present invention is that of providing a self-locking coupler, which avoids the need to use an excessive amount of coupling components; for example a coupler which avoids the need to use a nut or anti-slipping elements in a traditional bolt with nut connection system, and the need to use torque for the engagement tightening.

Yet another object of the present invention is that of providing a connection member suitable for being assembled simply with other elements in order to form connection means which are rapidly prepared and low in cost.

The previous objects are mainly achieved with reusable self locking coupler for the fast coupling a first and a second elements to be connected, said coupler comprising a main annular body connected or connectable to the first element to be connected and a plurality of flexible coupling fins for connecting said second element to be connected, said flexible fins being arranged along a perimetrical edge of said main body and protruding radially towards and against said second element to be connected, the coupler is characterized by the fact that each of said flexible coupling fins at its free end has at least an end coupling portion for coupling said second element which is provided rotated of an angle around the longitudinal axis of the same fin.

By mean of the above mentioned elongated flexible fins with a rotated end portion for coupling the second element to be connected the disconnection of said second element can be effected by simply rotating said second element in respect to the coupler in order to cause the "unscrewing" of the coupling engagement between the end portion of said flexible fins and said second element, so that the flexible coupling fins are not damaged in the disconnecting operation and the coupler can be reused.

Other advantages and features of the present invention will be understood on reading the following description regarding preferred embodiments of the invention.

The following description has to be read with reference to the accompanying drawings in which:
- Fig. 1 is a plan view of a first embodiment of the invention;
- Fig. 2 is a sectional view of the first preferred embodiment sectioned along line 2-2 of Fig. 1;
- Fig. 3 is an enlarged sectional view of the end portion of a fin sectioned along line 3-3 of figure 1;
- Fig. 4 is a view of an enlarged longitudinal section of a single fin taken along the line 4-4 of fig. 1;
- Fig. 4A is a view of an enlarged longitudinal section of a single fin taken along the lines 5-5 of Fig. 1.
- Fig. 5 is a sectional view of a coupling device which uses the first embodiment of the coupler;
- Fig. 6 is a plan view of a second embodiment;
- Figs. 7 and 8 are sectional views similar to the views of Figures 3 and 4 of details of the fins of the second embodiment;
- Fig. 9 is a plan view of a third embodiment;
- Fig. 10 is a sectional view of a device which uses the third embodiment of the present invention;
- Fig. 11 is a plan view of a fourth embodiment;
- Fig. 12 is a sectional view which shows a coupler device which uses the fourth preferred embodiment of the invention;
- Fig. 13 is a sectional view of a detail of the contact of the end portion of a fin with a threading of an element to be coupled;
- Fig. 14 is a sectional view of a connection according to the background art;
- Fig. 15 is a sectional view of the same connection in figure 14 which uses the coupler of the present invention; and
- Fig. 16 is a perspective view of a portion of a second embodiment of the fins for the coupler of the present invention.

In the figures the elements similar or equivalent are designated by the same numerical references.

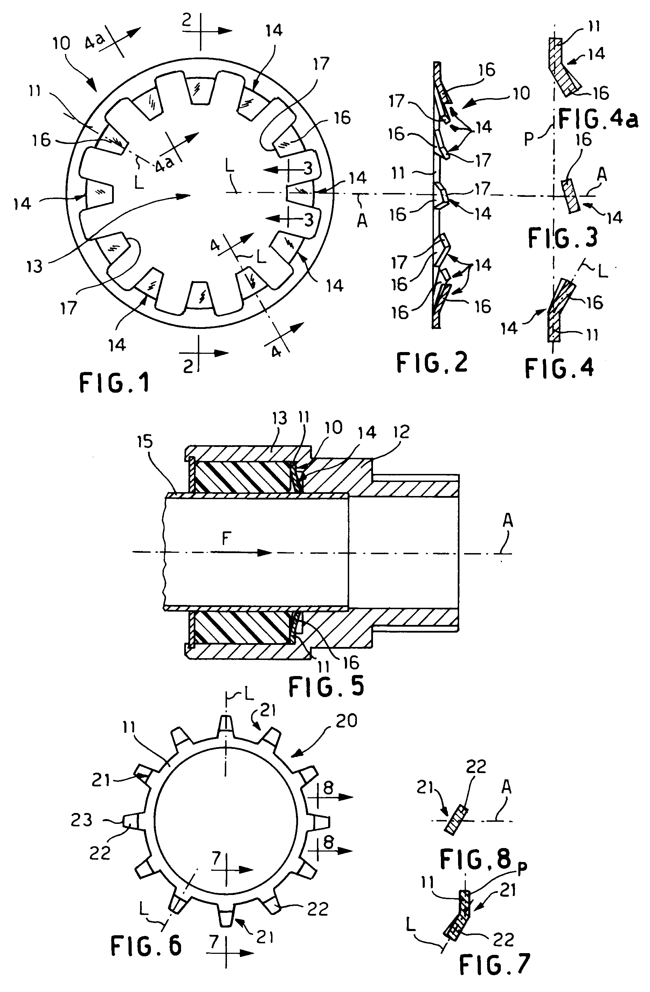

A first preferred embodiment of the present invention is shown in figures 1 to 5. In them it can be seen that the coupler 10 of the present invention comprises a main body 11 in the form of an annular plate, which is frictionally engaged with a first element 12 to be connected by means of its outer edge and a plurality of elongated fixed fins 14 which extend radially from the internal edge perimetral of the main body 11 towards and against a second element to be connected 15.

The fins 14 are equally angularly spaced to provide a balanced grip of the element 15.

Said element 15 is inserted by means of a simple axial thrust in the central hole 13 of the annular body 11 to engage with its outer surface the end faces 17 of the fins 14, in order to perform a quick coupling with the first element 12 through the coupler 10.

The inserting of the second element 15 causes the flexible fins 14 to bend without permanent deformation.

According to the invention each of said elongated flexible fins 14 has an end portion 16 for coupling said element 15 which is provided rotated of an angle around its own longitudinal axis L; in other words the end portions 16 are arranged in an oblique position in relation to axis A of the coupler, as is shown more clearly in the enlarged detail of figure 3.

Said rotated first end portion 16 of the fins confers the coupler of the invention with an increased flexing resistant section, i.e. an increased moment of inertia, so as to counteract the counterflexures which are generated in the fins 14 in the attempts to pulling out said second element 15. Moreover, being the end portions 16 provided tilted with the same angle, the coupler of the present invention is conferred with the characteristic of being able to be disconnected without being damaged and hence to be used once again; this is achieved by simply rotating, that is to say unscrewing, said second element 15 in relation to the coupler 10.

Said oblique arrangement of the ends 16 of the fins 14 provides, in fact, when the element 15 is rotated appropriately, a forward movement in the direction of withdrawal, for an element 15 which has either a threaded or smooth coupling surface.

The first end portions 16 of the fins 14 can be provided rotated at an angle of between 0° and 90°, ends excluded, either in an angular direction or in the opposite angular direction, allowing always a sufficient possibility to unscrew the coupling engagement.

Advantageously according to the present invention the fins 14 comprise also a second end portion 16 at the free ends of the fins said end portion 16 of each fin 14 is bent or tilted in respect to the plane P defined by the annular body 11 in the same direction to that of insertion of the second element to be connected 15, a direction which is marked by the arrow F in figure 5. Said figure 5 shows an use of the coupler of the present invention, in a joining device suitable for connecting cable carrier tubes.

Such a slant, which can be advantageous for any angle of slant in relation to the plane P of the annular element 11 of between 90° and 0°, obviously not including the ends, allows fast coupling of the connection eliminating definitively any risk or deformation of the fins. In fact, when the second element to be connected is inserted inside the hole 13 of the coupler, the aforementioned fins 14 which are bent in accordance with the direction of insertion, yield without offering any resistance and remain undeformed. By acting on element 15 in the opposite direction to the arrow F in an attempt to remove it, resistance is encountered from the flexible fins 14 which, by engaging with their own faces 17 against the external surface of said second element to be connected 15, prevent it from coming out.

In above described first embodiment of the coupler of the invention the first rotated end portion of the fin and the second end portion of the fin correspond to the same end portion of the fin; in fact they are designed in the figure 1 to 5 by the same numerical reference (the number 16).

A second embodiment 20 of the invention is shown in figures 6 to 8, where the annular body 11 and the fins 21 are wholly similar to those shown for the first preferred embodiment, with angularly equidistant fins 21, and with slanted second end portion and rotated first portions end 22 which are respectively slanted in respect to the plans P of the annular body 11 and rotated around to the longitudinal axis L of the slanted fin. In this case however the fins 21 extend radially from the external perimetral edge towards the exterior of said annular plate 11. This second embodiment is suitable for coupling with a female element as second element to be connected and a male element as first element to be connected.

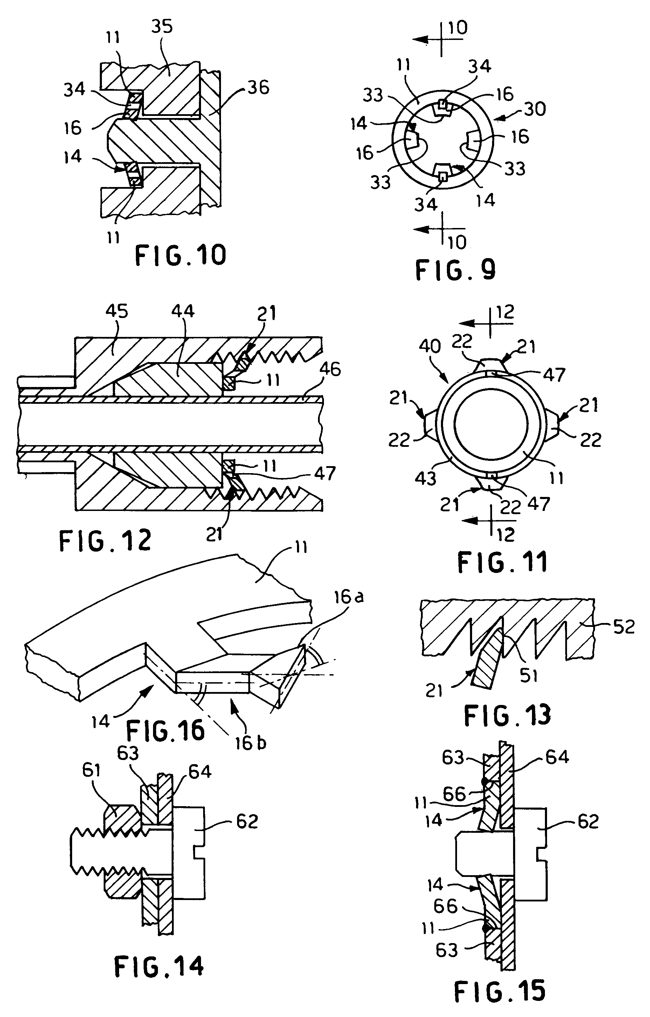

Figures 9 and 10 show a third preferred embodiment 30 of the coupler of the invention. It has an annular body 11 and inwardly extending fins 14 similar to those of the first embodiment.

The fins 14 of this embodiment nevertheless have a curved end face 33 which adapts better to the external surface of the element to be connected; obviously in this case too the fins 14 are configured with the end portions 16 slanted in respect to the plane defined by the annular body 11 and rotated in relation to their own longitudinal axis, although this latter fact is not explicitly shown in the drawings.

Moreover holes 34 are provided on the coupler for anchoring a tool for disengaging or engaging the part of the invention.

Figure 10 shows, in section, an application of this third preferred embodiment. In it a component to be assembled 35 is restrained by the annular body 11 while the fins 14 engage with the end portions 16 a second element to be connected 36 of the male type.

Figure 11 shows a fourth preferred embodiment 40 of the invention, in which the coupler has a structure which is substantially similar to that of said second preferred embodiment, from which it differs by virtue of the smaller number of fins 21 and of having an annular main body 11 which has a tilted annular projection 43, as shown in figure 12 where said fourth preferred embodiment is shown in one of its applications in a pressure cable union. In figure 12 the coupler presses a conical element 44 against facing conical surfaces of the body 45 of the union, causing a circumferential gripping pressure of a cable 46.

In this fourth embodiment the tilted projection 43 has the same sign of slant as the slanted end portion 22 of the fins 21 but with a slant of different value. Obviously, the end portions 22 of the fins 21 are rotated, in relation to their longitudinal axis, as in the previous embodiments, although this fact is not shown expressly in the drawings.

Said projection 43 enables shorter and more rigid fins 21 to be obtained which press with greater force and hence provide greater resistance to removal of the connected cable. In this embodiment holes 47 are also provided for anchoring a tool for engaging and disengaging said coupler, and are arranged on the projection 43. In this way anchoring of the tool for engaging and disengaging the coupler is facilitated by the space left by the projection.

Due to the slant of their longitudinal profile, the fins 14, 21 with their ends act with a certain pressure against the face opposite to them of the thread of a threaded element to be connected, generating a friction contact which opposes spontaneous unscrewing of the connection.

This fact is shown in the detail in figure 13. In figure 13 the fin 21 touches, due to the bending generated by the slant of the fin, the face 51 of the thread of the element to be connected 52 with a certain pressure, generating a friction resistance proportional to said pressure, which opposes the relative sliding of the facing surfaces, in this way improving the self-locking feature of the coupler of the present invention.

In figure 13 the fin has a pointed end, nevertheless any other configuration of the end of the fin which adapts it to any thread or coupling surface of the part to be connected can be foreseen for the present invention.

Moreover the fins 14, 21 can be provided with a pointed end having a hardness greater than that of the external surface of the element to be connected, the coupler, by screwing onto or into the element to be connected, is able to engrave, that it is to say to thread its surface, providing the coupler of the invention with an advantageous self-threading feature.

Figures 14 and 15 show as further clarification of the advantages of the present invention, a comparison between a traditional bolt-nut connection and a connection of a bolt with the coupler of the present invention. In figure 14 a nut 61, by screwing itself onto a bolt 62, engages a part 63 and joins it to a second part 64 engaged by the screw 62.

In figure 15 the part 64 is attached to the part 63 thanks to the bolt 62 which engages with the fins 14 of the coupler of the invention which has an annular main body 11 which can advantageously be wholly assembled with the part 63 for example by means of a weld 66 or cast directly with the part 63. This therefore eliminates the need to use the nut as occurs in traditional connections and also avoids the need to provide anti-unscrewing elements, such as washers, split pins etc., both the previous functions being provided by the coupler of the invention.

In all the above described embodiments of the invention each fin 14, 21 has a first rotated end portion and a second slanted end portion which substantially coincide as the rotation and the slant of the fin are provided substantially in the same point of the fin 14, 21.

However the coupler of the present invention can have fins having a first end portion 16a rotated around the longitudinal axis of the fin and a second end portion 16b slanted in respect to the plane defined by the annular body 11, with said second slanted end portion 16b which is longer and including said first rotated end portion 16a, as it is shown in figure 16.

Obviously, also a coupler with the first rotated end portion longer than and including the second slanted end portion is conceivable for the present invention.

It is clear that what has been described and shown in the accompanying drawings, in relation to the preferred embodiments of the coupler of the invention, must be understood as being non-limitative of the inventive principle claimed.

## Claims

1. A reusable and self-locking coupler for the fast coupling of a first and a second elements to be connected, said coupler comprising a main flatted body (11) connected or connectable to the first element to be connected and a plurality of elongated flexible fins (14, 21) for coupling said second element to be connected, said elongated flexible fins (14, 21) being arranged along a perimetrical edge of said main body and extending radially towards and against said second element to be connected, the coupler (10) is characterized by the fact that each of said elongated flexible coupling fins (14, 21) at its free end has at least a first end coupling portion (16, 16a, 22) for coupling said second element which is provided rotated at an angle around to the longitudinal axis (L) of the same fin (14, 21).

2. A coupler according to claim 1 characterized in that each of said flexible coupling fins (14, 21) comprises a second end portion (16, 16b, 22) which is arranged slanted in respect to the transversal plane (P) defined by the main body (11).

3. A coupler according to any of the previous claim, characterised in that said main body (11) is in the form of an annular plate.

4. A coupler according to claim 1, characterised in that said fins (14, 21) extend from the external edge of said main body (11) radially and outwards.

5. A coupler according to claim 1, in which said main body (11) has an internal cavity characterised in that said fins (14, 21) extend radially from the internal edge of said main body (11) and are directed towards the interior of said cavity.

6. A coupler according to any one of the previous claims, characterised in that said flexible fins (14, 21) are arranged angularly and equidistant.

7. A coupler according to claim 1, characterised in that holes (34, 47) are provided on said main body (11) for anchoring an appropriate tool for engaging or disengaging the coupler (10).

8. A coupler according to claim 2, characterised in that said main body (11) has an annular projection (43) which is tilted in relation to the transversal plane defined by the main body (11).

9. A coupler according to claim 8, characterised in that the slant of said projection (43) is of the same sign as the slant of the flexible fins (14, 21) but of a different value.

10. A coupler according to claim 1, characterised in that at least the front face (17) of said first end coupling portion (16, 16a) of the fins (14, 21) has a hardness greater than that of the surface of coupling of the second element to be connected on which said fins (14, 21) engage.

11. A coupler according to claim 1, characterised in that said main body (11) is firmly attached to said first element to be connected.

12. A coupler according to claim 11, characterised in that said main body (11) is cast together or welded to said first element to be connected.
